# EUROPEAN PATENT SPECIFICATION

(11) **EP 2 352 972 B1**
(45) Date of publication and mention of the grant of the patent: **06.04.2022**
(21) Application number: 09801520.9
(22) Date of filing: 09.11.2009
(51) Int. Cl.: G01D 5/14, B21J 15/44, B23B 49/00, B23Q 17/22, B21J 15/10, B21J 15/28

(54) **ALIGNMENT SYSTEM**
AUSRICHTUNGSSYSTEM
SYSTÈME D'ALIGNEMENT

(30) Priority: 07.11.2008 GB 0820405
(43) Date of publication of application: 10.08.2011
(73) Proprietor: Advanced Analysis and Integration Limited, Manchester M90 3DN (GB)
(72) Inventor: CORRY, John Joseph, Cheadle Hulme, Cheshire SK8 6ND (GB)
(74) Representative: HGF
(86) International application number: PCT/GB2009/002636
(87) International publication number: WO 2010/052480

(56) References cited:
- EP-A2- 1 132 164
- WO-A1-98/49938
- WO-A1-2004/016380
- US-B1- 7 382 119
- US-B2- 6 927 560

## Description

This invention relates to alignment systems, especially, but not exclusively, systems for locating a hole in a support beneath a skin or cladding to drill therethrough from the side opposite the support to facilitate riveting the skin to the support, as, more particularly, in aircraft construction.

Alignment is at present effected magnetically. One pole of a magnet the field of which is aligned with the hole is placed beneath the hole so as to generate a test field of which field lines extend through the hole, and, of course, through the skin, and a field detector is placed on the skin and positioned to maximise the detected field.

WO2004/016380 and US6927560 disclose arrangements in which an array of Hall effect devices senses the test field at the skin and the outputs of the devices are analysed to provide an indication of the displacement of the array relative to the hole, so that the array can be moved to minimise the indicated displacement whereby to align the array with the hole. Symmetric arrays of three up to sixteen Hall effect devices are described, more devices supposedly giving greater accuracy. US 7382199 B1 and EP 1132164 A2 also disclose arrangements having Hall effect devices.

The arrangements are moved over the skin surface until the underlying hole is located, then clamped, as by suction, to serve as a drill guide.

Such arrangements are claimed to be able to locate the centres of holes with atypical accuracy of ±0.5 mm at hole depths of up to 22 mm with a 10 mm target - that is to say, a 10 mm diameter magnet pole. Accuracy is somewhat less at greater depths. For greater depths, stronger, and therefore, larger magnets are used. However, as no account is taken of the geomagnetic field and anomalies due to local magnetic materials, these arrangements can never achieve perfect alignment. Also, because different magnets are used for different depths of hole, there is always the possibility that the wrong magnet will be selected by an operator, and this may give rise to a gross error, which will be undetected until a hole has been drilled.

The present invention provides alignment systems, including hole finder arrangements that are capable of substantially greater accuracy.

According to the invention, there is provided an alignment system as recited in the appended claims.

The expression 'magnetic test field' as used herein encompasses both purely magnetic fields and electromagnetic fields.

A GMR, or Giant Magnetoresistance, sensor is a device using thin films of magnetic and non-magnetic materials that changes its resistance markedly when subject to a magnetic field. Materials exhibiting magneto resistance, a change in electrical resistance due to a magnetic field, have been known for many years, but the effect has been quite small, and Hall effect devices have been the detector of choice in hole finder arrangements. The GMR device, however, can be used to make smaller, more sensitive, and therefore more accurate alignment devices. GMR devices and their principle of operation are described in Roumenin, C.S. (1994) Handbook of Sensors and Actuators Volume 2: Solid State Magnetic Sensors. Series edited by Middelhoek, S. Amsterdam: Elsevier.

Included within the term Giant Magnetoresistance, as used herein, are even more powerful devices of the same general nature, such as Colossal Magnetoresistance sensors, or CMRs.

Transverse axes of the GMR sensors may be orthogonal.

By 'transverse axis' is meant an axis transverse to the detection axis - the axis along which a magnetic field is detected - such that magnetic field aligned with the transverse axis gives a zero signal.

This arrangement of the sensors means that when the system is aligned - in a hole detector, when the alignment position is aligned with the hole position - they each give zero signals. A magnetic field from a magnet whose magnetic axis is aligned with a hole that is to be located generates a field which follows the familiar pattern in which the field lines form loops extending from one pole to the other. The sensors, displaced from the hole axis, intercept field lines which are bent away from the hole axis at substantially 90° - if the hole is vertical, the field lines where they intercept the sensors are substantially horizontal.

The sensitivity of the arrangement is substantially better than prior art sensor arrangements. The sensitivity is such that they are sensitive to fields much smaller than ambient fields, in particular the geomagnetic field (between about 0.3 and 0.6 gauss, depending on location) but also stray fields from nearby magnetic items. With prior art Hall effect device sensors, large magnetic test fields are used rendering the effect of ambient fields negligible. With GMRs, test fields can be used, on the other hand, that are small compared to ambient fields, absent ambient field compensation.

While ambient field compensation can be effected when the test field is constant, as by a permanent magnet, it is preferred to use a varying test field, generated by an electromagnet that is switched on and off. The magnet may be continuously switched during a measurement, with an asymmetric mark-space ratio. The ambient field, when the magnet is off, will be aligned with one, at most, of the sensors, usually neither of them, and so will generate signals from the sensors which will be proportional to the components of the ambient field aligned with the sensors. When the magnet is on, its field will change the resistances of the sensors and alter the signal from each unless its transverse axis is aligned with the field lines. When the system is aligned, the magnet contributes nothing to the signal from either sensor and the system is confirmed to be aligned when there is no difference in the signals whether the magnet is on or off. If the system is roughly aligned to begin with, it is only necessary to adjust its position slightly until alignment is confirmed. The magnet may be switched on and off continually during the measurement, so that the geomagnetic field compensation is continuous.

The system may comprise indicator means indicating the direction in which it must be adjusted to reach alignment. The indicator means may comprise lamps arranged at 'compass' points. Adjacent lamps lit means adjust position in a direction between them, one lamp lit means adjust in its direction. While "all lamps out" could confirm alignment, it is preferred to have a positive indication, and, when close to alignment, the lamps can change colour, e.g. from red to green, and final adjustment confirmed when all lamps are lit. When this colour change is effected, the directional algorithms are reversed - movement is indicated towards unlit lamps.

The arrangement may also comprise a third magnetic field detector whose magnetic axis is orthogonal to the magnetic axes of the first and second detectors. The magnetic axis of the third detector may pass through the intersection of perpendiculars to the magnetic axes of the first and second detectors, unless the system is to be used as a drill guide, when it may be offset to allow drill access. The third detector may be used roughly to locate the hole when it detects a field aligned with the magnet. Adjustment, then, of the position of the arrangement so as to zero the fields detected by the first and second detectors will precisely locate the hole. Signal from this third magnet can be used to effect the colour change and algorithm reversal referred to above.

An additional strategy can be adopted to correct for thermal or other internal drift in the electronics. The magnet polarity can be reversed, and again this can be done continuously during the measurement. Drift in the electronics will show create opposite offsets with opposite polarity that can be cancelled electronically.

GMR detectors can be packaged, with a battery power supply, which may be rechargeable, in an easily manageable casing of roughly 200x100x10 mm. The test field may be provided by an electromagnet, which, since it does not need to be powerful, may require only a small battery power supply, making for an easily portable and usable instrument. The electromagnet may be comprised in a small package together with a battery and a switching circuit. The arrangement can be intrinsically safe, the detector arrangement being completely sealed in its casing, with no need of external cabling.

The casing may have attachment means adapted to attach it to the skin surface when it is centred over a hole, and may have a drill or marker guide aperture. The attachment means may comprise a suction arrangement.

According to the invention, there is also provided a method for locating a hole in a support behind a skin as recited in the appended claims.

The method may include ambient field compensation. This may be effected by making a first measurement with no test field, so that only the ambient field is measured, and then a second measurement with the test field superimposed on the ambient field.

The test field may be switched on and off continuously during the location procedure so as to effect this compensation continuously during the measurement. The mark-space ratio may be asymmetric, to facilitate distinguishing between magnet-on and magnet-off sign

The method may include a preliminary step of roughly locating the hole by adjusting the position of the arrangement over a supposed hole position until a maximum signal is obtained from a third magnetic field detector adapted to detect the test field aligned with the hole. The position of the arrangement may then be further finely adjusted until the difference in the signals from the first and second detectors is zero. A geomagnetic compensation step may precede or follow the preliminary step. Such compensation can, however, be continuously effected during the measurement process by switching the magnet on and off.

The method may then include the further step of locking the arrangement in place to allow it to be used as a drill or marker guide for drilling through the skin. Locking may be by a suction cup arrangement. When used as a drill guide, the third detector should be offset to permit drill access.

Alignment methods and arrangements according to the invention facilitate inter alia the speedier and more accurate location of holes for drilling purposes. Particularly in aircraft construction, where many rivets are used to attach a skin to a frame, the arrangement is substantially lighter and smaller, because of the reduced power requirements and the reduction in the number of components, than prior art arrangements, and this facilitates deployment and reduces the time required for the accurate location of holes, and increases the rates of production of aircraft components as well as enabling design optimisation because of the improved accuracy of hole location. Where damaged skin panelling has to be replaced, after a ground collision, perhaps, or in flight damage from a bird strike or hail, the improved accuracy of location extends the life of the frame to which the skin has to be attached by not having to increase the bore of the frame hole too much due to incorrect alignment.

Hole finder methods and arrangements according to the invention will now be described with reference to the accompanying drawings, in which:

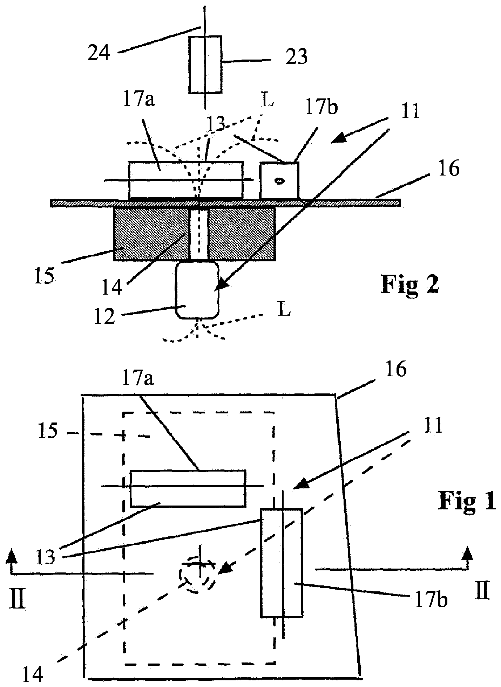

- Figure 1: is a diagrammatic plan view of one arrangement configured as a hole finder;
- Figure 2: is a part sectional view on the line II-II of Figure 1, showing the hole finder on a skin that has to be riveted to a drilled frame member;

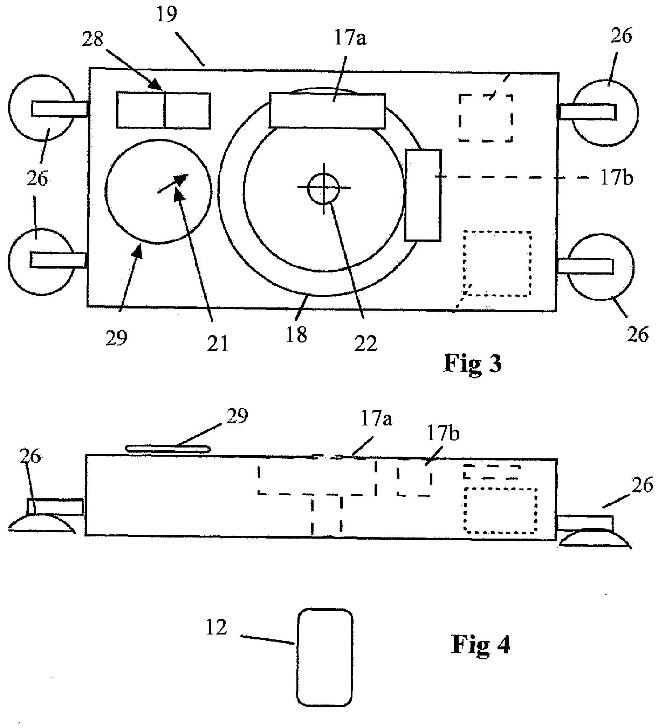

- Figure 3: is a diagrammatic plan view of another arrangement; and
- Figure 4: is a side view of the arrangement shown in Figure 3.

The drawings illustrate an alignment system 11 comprising a test field generator 12 generating a magnetic test field that is small in comparison to ambient magnetic fields and a sensor arrangement 13 adapted to detect the magnetic test field with ambient field compensation.

The alignment system 11 is configured as a hole finder, adapted to locate a hole 14 in a frame member 15 beneath a skin 16 which is to be attached thereto by rivets. It is required to drill a hole through the skin 16 in precise alignment with the hole 14. The sensor arrangement 13 then comprises a test field detector comprising GMR sensors 17a, 17b. The arrangement 13 is deployed on the skin 16 roughly above where the hole 14 is expected to be. The test field is generated by the field generator 12, which is placed at the bottom of the hole 14 so that its field lines L are directed through the hole 14 and through the skin 16 directly above.

The magnetic field lines follow the familiar pattern forming loops L extending from one pole of the magnetic test field generator 12 to the other. Two GMR sensors 17a, 17b, displaced from the hole axis, intercept field lines where they are bent away from the hole axis at substantially 90° - if the hole 14 is vertical, the field lines where they intercept the sensors 17a, 17b are substantially horizontal, or at least have a substantial horizontal component.

The GMR, or Giant Magnetoresistance, sensors 17a, 17b are devices using thin films of magnetic and non-magnetic materials that change their resistance markedly when subject to a magnetic field. Materials exhibiting magneto resistance, a change in electrical resistance due to a magnetic field, have been known for many years, but the effect has been quite small, and Hall effect devices have been the detector of choice in hole finder arrangements. The GMR device, however, can be used to make smaller and more accurate finder devices than conventional Hall effect hole sensors.

The sensors 17a, 17b are arranged in a circular well 18 of a casing 19 that holds a power supply and electronic circuitry, not shown, that controls and interprets signals from the sensors 17a, 17b. The sensors 17a, 17b are each arranged with their magnetic axes directed at right angles to the radius from the centre of the well 18, and at right angles to one another, so that, when the field lines are directed along the radius, there is no magnetic field along the magnetic axis, and the GMR device gives a zero reading. The GMRs are, of course, directional. Four light emitting diodes, or like indicators, 21 are arranged at cardinal points on the casing 19 and light up when there is a field along the axis of a corresponding GMR. If one indicator 21 is lit, movement of the casing 19 in the direction of the lit indicator brings it closer to the zero field position. If two are lit, movement of the casing first in one direction then the other can bring it to the position where no field is detected by either GMR, indicating that the device is centrally over the hole 14. Rather, however, than have all lights out indicating alignment, the lights are arranged to change colour, e.g. from red to green, when approximate alignment is detected, and to reverse their significance, indicating the arrangement is to be moved towards an unlit light. Four green lights then indicates perfect alignment.

This is what would happen in the absence of ambient magnetic fields. The GMRs 17a, 17b, however, can detect far weaker fields than can the conventional Hall effect sensors, so that the geomagnetic field can assume an importance.

The arrangement is, however, compensated for the local geomagnetic field by a preliminary measurement in the absence of the test field. This may be simply effected by 'swinging' the arrangement 11 in the absence of the test field, to zero the difference in the fields measured by the first and second detectors. Once the arrangement 11 is correctly aligned, the test field is introduced by applying the magnet and the hole detection procedure completed. This means that the arrangement is immune to any anomalies in the geomagnetic field caused, for example, by nearby magnetic materials. However, from the preliminary measurement, a compensating bias could automatically be applied by software to a measurement when the test field is introduced, so that the arrangement 11 can be used in any position of alignment with respect to the geomagnetic field.

In the arrangement illustrated, this is effected by the field generator 12 being an electromagnet which is cycled on and off, so that the GMRs sense alternately the ambient field and the resultant of the ambient field and the applied field, from which the ambient field can be subtracted by the software. The two fields are readily distinguished by the mark/space ratio of the electromagnet being asymmetric.

The power requirements of the arrangement are substantially less than those needed by conventional Hall effect sensor-based arrangements, and the detectors 12, 13 are packaged, with a battery power supply which is rechargeable, in the casing 19, which is easily manageable at roughly 200x100x10 mm.

The casing has attachment means, not shown, in the form of suction cups adapted to attach it to the skin surface when it is centred over a hole, and has a drill or marker guide aperture 22.

The arrangement also comprises a third magnetic field detector 23 whose magnetic axis 24 is orthogonal to the magnetic axes of the first and second detectors - where those axes might be labelled x and y axes, axis 24 would be the z axis. The field detector 23, which may be a Hall effect device, is offset from the drill guide aperture 22 to allow access for a drill. The third detector 23 may be used roughly to locate the hole 14 when it detects a maximum field that is stronger than fields detected by the GMR sensors 17a, 17b. Adjustment, then, of the position of the arrangement 11 on the basis of signals from the GMR detectors will precisely locate the hole 14. Signals from the third detector 23 are used to effect the colour change and reversal of significance of the leds 21 referred to above.

The test field generator 12 comprises a casing with an internal solenoid and control circuitry for generating the mark/space feature, and a projecting pole that fits into the hole 14 in the frame member - this may be made a push fit, so that no other support is necessary. In another arrangement, a single control box can have multiple solenoids with pole pieces, so that multiple holes 14 may be powered simultaneously, and the sensor arrangement 13 deployed to locate the multiple holes without having to relocate the fest field generator between holes.

## Claims

1. An alignment system (11) comprising:
a test field generator (12) to generate a magnetic test field; and
a test field detector (13) to detect the magnetic test field,
**characterised in that** the test field detector (13) comprises first and second giant magnetoresistance, GMR, sensors (17a, 17b) each having a transverse axis transverse to a respective detection axis of each sensor, the transverse axes being arranged to pass through an alignment position so that when the magnetic test field is aligned with the transverse axes the sensors each give a zero signal.

2. An alignment system according to claim 1, in which the transverse axes are orthogonal to one another.

3. An alignment system according to claim 1 or 2, comprising a third magnetic field detector (23) whose detection axis (24) is orthogonal to the detection axes of the first and second sensors (17a, 17b).

4. An alignment system according to claim 3, in which the detection axis (24) of the third detector (23) is offset from the intersection of perpendiculars to the detection axes of the first and second sensors (17a, 17b).

5. An alignment system according to any one of claims 1 to 4, in which the test field is provided by electromagnet.

6. An alignment system according to any one of claims 1 to 5, contained in a casing (19) having attachment means (26) adapted to attach it to a skin (16) to be drilled when it is centred over a hole (14) in a member behind the skin, and in which, optionally, the attachment means comprise a suction arrangement.

7. An alignment system according to claim 6, in which casing (19) has a drill or marker guide aperture (22).

8. An alignment system according to any one of claims 1 to 7, comprising a visual display (21) to indicate fields detected by the sensors (17a, 17b), and in which, optionally, the visual display comprises indicators at cardinal points of the device.

9. A method for locating a hole (14) in a support behind a skin (16) comprising:
generating a magnetic test field of which field lines pass along the hole and through the skin; and
detecting the test field that passes through the skin using a field detector (13) comprising first and second giant magnetoresistance, GMR, sensors (17a, 17b), the sensors each having a transverse axis transverse to a respective detection axis of each sensor, the transverse axes being arranged to pass through an alignment position,
in which the hole is located when the GMR sensors each give a zero signal indicating that magnetic field lines are at right angles to the detection axes.

10. A method according to claim 9, including the step of geomagnetic or ambient field compensation in which, with random alignment of the arrangement, signals from the first and second sensors (17a, 17b) measured with no test field are subtracted from signals measured when the test field is applied.

11. A method according to claim 9, including the step of geomagnetic or ambient field compensation by making a first measurement with no test field and in which the arrangement is rotated until the difference in signals from the first and second sensors (17a, 17b) is zero, and this alignment is maintained when the test field is applied.

12. A method according to claim 10 or 11, in which the test field is cycled on and off, and in which, optionally, the mark/space ratio of the on/off cycling is asymmetric.

13. A method according to any one of claims 9 to 11, including a preliminary step of roughly locating the hole (14) by adjusting the position of the arrangement over a supposed hole position until a maximum signal is obtained from a magnetic field detector (24) aligned to detect the test field aligned with the hole.

14. A method according to any one of claims 9 to 13, including the further step of locking the arrangement in place to allow it to be used as a drill or marker guide for drilling through the skin, and in which, optionally, locking is effected by a suction cup arrangement (26).

15. A method according to any one of claims 9 to 14, in which centring is confirmed by a visual display arrangement (21), and in which, optionally, the visual display arrangement indicates the direction in which the arrangement is to be adjusted to achieve centring.

## Patentansprüche

1. Ausrichtungssystem (11), umfassend:
einen Testfeldgenerator (12), um ein magnetisches Testfeld zu erzeugen; und
einen Testfelddetektor (13), um ein magnetisches Testfeld zu erfassen,
**dadurch gekennzeichnet, dass** der Testfelddetektor (13) einen ersten und einen zweiten Riesenmagnetowiderstand- (GMR-)Sensor (17a, 17b) umfasst, der jeweils eine Querachse quer zu einer jeweiligen Erfassungsachse von jedem Sensor aufweist, wobei die Querachsen angeordnet sind, um durch eine Ausrichtungsposition zu verlaufen, sodass die Sensoren jeweils ein Nullsignal geben, wenn das magnetische Testfeld mit den Querachsen ausgerichtet ist.

2. Ausrichtungssystem nach Anspruch 1, bei dem die Querachsen orthogonal zueinander sind.

3. Ausrichtungssystem nach Anspruch 1 oder 2, umfassend einen dritten Magnetfelddetektor (23), dessen Erfassungsachse (24) orthogonal zu den Erfassungsachsen des ersten und des zweiten Sensors (17a, 17b) ist.

4. Ausrichtungssystem nach Anspruch 3, bei dem die Erfassungsachse (24) des dritten Detektors (23) von dem Schnittpunkt der Senkrechten zu den Erfassungsachsen des ersten und des zweiten Sensors (17a, 17b) versetzt ist.

5. Ausrichtungssystem nach einem der Ansprüche 1 bis 4, bei dem das Testfeld durch einen Elektromagneten bereitgestellt wird.

6. Ausrichtungssystem nach einem der Ansprüche 1 bis 5, das in einem Gehäuse (19) enthalten ist, das Anbringungsmittel (26) aufweist, die geeignet sind, um es an einer zu bohrenden Haut (16) anzubringen, wenn es über einem Loch (14) in einem Element hinter der Haut zentriert ist, und bei dem die Anbringungsmittel optional eine Sauganordnung umfassen.

7. Ausrichtungssystem nach Anspruch 6, bei dem das Gehäuse (19) eine Bohrer- oder Markierungsführungsöffnung (22) aufweist.

8. Ausrichtungssystem nach einem der Ansprüche 1 bis 7, umfassend eine visuelle Anzeige (21), um Felder anzugeben, die von den Sensoren (17a, 17b) erfasst werden, und bei dem die visuelle Anzeige optional Indikatoren an Kardinalpunkten der Vorrichtung umfasst.

9. Verfahren zum Positionieren eines Lochs (14) in einem Träger hinter einer Haut (16), umfassend:
Erzeugen eines magnetischen Testfelds, dessen Feldlinien entlang des Lochs und durch die Haut verlaufen; und
Erfassen des Testfelds, das durch die Haut verläuft, unter Verwendung eines Felddetektors (13), umfassend einen ersten und einen zweiten Riesenmagnetowiderstand- (GMR-)Sensor (17a, 17b), wobei die Sensoren jeweils eine Querachse aufweisen, die quer zu einer jeweiligen Erfassungsachse jedes Sensors ist, wobei die Querachsen angeordnet sind, um durch eine Ausrichtungsposition zu verlaufen,
in dem sich das Loch befindet, wenn die GMR-Sensoren jeweils ein Nullsignal geben, das angibt, dass die Magnetfeldlinien in rechtem Winkel zu den Erfassungsachsen sind.

10. Verfahren nach Anspruch 9, einschließlich des Schritts einer Kompensation des geomagnetischen Felds oder des Umgebungsfelds, bei dem bei zufälliger Ausrichtung der Anordnung die Signale des ersten und des zweiten Sensors (17a, 17b), die ohne Testfeld gemessen wurden, von den Signalen subtrahiert werden, die gemessen werden, wenn das Testfeld angelegt wird.

11. Verfahren nach Anspruch 9, einschließlich des Schritts einer Kompensation des geomagnetischen Felds oder des Umgebungsfelds, indem eine erste Messung ohne Testfeld durchgeführt wird, bei der die Anordnung gedreht wird, bis die Differenz der Signale des ersten und des zweiten Sensors (17a, 17b) Null ist, und diese Ausrichtung beibehalten wird, wenn das Testfeld angelegt wird.

12. Verfahren nach Anspruch 10 oder 11, bei dem das Testfeld abwechselnd ein- und ausgeschaltet wird und bei dem optional das Markierung/Raum-Verhältnis beim abwechselnden Ein- und Ausschalten asymmetrisch ist.

13. Verfahren nach einem der Ansprüche 9 bis 11, einschließlich eines vorbereitenden Schritts eines groben Positionierens des Lochs (14) durch Einstellen der Position der Anordnung über einer angenommenen Lochposition, bis ein maximales Signal von einem Magnetfelddetektor (24) erlangt wird, der ausgerichtet ist, um das auf das Loch ausgerichtete Testfeld zu erfassen.

14. Verfahren nach einem der Ansprüche 9 bis 13, einschließlich des weiteren Schritts eines Arretierens der Anordnung, damit sie als Bohrer- oder Markierungsführung zum Bohren durch die Haut verwendet werden kann, und bei dem das Arretieren optional durch eine Saugnapfanordnung (26) erfolgt.

15. Verfahren nach einem der Ansprüche 9 bis 14, bei dem ein Zentrieren durch eine visuelle Anzeigeeinrichtung (21) bestätigt wird, und bei dem die visuelle Anzeigeeinrichtung optional die Richtung angibt, in die die Anordnung zum Erreichen der Zentrierung verstellt werden muss.

## Revendications

1. Système d'alignement (11) comprenant :
un générateur de champ de test (12) pour générer un champ de test magnétique ; et
un détecteur de champ de test (13) pour détecter le champ de test magnétique,
**caractérisé en ce que** le détecteur de champ de test (13) comprend des premier et deuxième capteurs à magnétorésistance géante, GMR (17a, 17b) ayant chacun un axe transversal transversal à un axe de détection respectif de chaque capteur, les axes transversaux étant agencés pour passer par une position d'alignement de sorte que lorsque le champ de test magnétique est aligné avec les axes transversaux, les capteurs donnent chacun un signal nul.

2. Système d'alignement selon la revendication 1, dans lequel les axes transversaux sont orthogonaux entre eux.

3. Système d'alignement selon la revendication 1 ou 2, comprenant un troisième détecteur de champ magnétique (23) dont l'axe de détection (24) est orthogonal aux axes de détection des premier et deuxième capteurs (17a, 17b).

4. Système d'alignement selon la revendication 3, dans lequel l'axe de détection (24) du troisième détecteur (23) est décalé de l'intersection des perpendiculaires aux axes de détection des premier et deuxième capteurs (17a, 17b).

5. Système d'alignement selon l'une quelconque des revendications 1 à 4, dans lequel le champ de test est fourni par électroaimant.

6. Système d'alignement selon l'une quelconque des revendications 1 à 5, contenu dans un boîtier (19) comportant des moyens de fixation (26) adaptés pour le fixer à une peau (16) à percer lorsqu'il est centré sur un trou (14) dans un élément derrière la peau, et dans lequel, éventuellement, les moyens de fixation comprennent un agencement d'aspiration.

7. Système d'alignement selon la revendication 6, dans lequel le boîtier (19) a une ouverture de guidage de foret ou de marqueur (22).

8. Système d'alignement selon l'une quelconque des revendications 1 à 7, comprenant un affichage visuel (21) pour indiquer des champs détectés par les capteurs (17a, 17b), et dans lequel, facultativement, l'affichage visuel comprend des indicateurs aux points cardinaux du dispositif.

9. Procédé pour localiser un trou (14) dans un support derrière une peau (16) comprenant :
la génération d'un champ de test magnétique dont les lignes de champ passent le long du trou et à travers la peau ; et
la détection du champ de test qui traverse la peau à l'aide d'un détecteur de champ (13) comprenant des premier et deuxième capteurs à magnétorésistance géante, GMR, (17a, 17b), les capteurs ayant chacun un axe transversal, transversal à un axe de détection respectif de chaque capteur, les axes transversaux étant agencés pour passer par une position d'alignement,
dans laquelle se trouve le trou lorsque les capteurs GMR donnent chacun un signal nul indiquant que les lignes de champ magnétique sont perpendiculaires aux axes de détection.

10. Procédé selon la revendication 9, comprenant l'étape de compensation de champ géomagnétique ou ambiant dans laquelle, avec un alignement aléatoire de l'agencement, les signaux provenant des premier et deuxième capteurs (17a, 17b) mesurés sans champ de test sont soustraits des signaux mesurés lorsque le champ de test est appliqué.

11. Procédé selon la revendication 9, comprenant l'étape de compensation de champ géomagnétique ou ambiant en effectuant une première mesure sans champ de test et dans laquelle l'agencement est tourné jusqu'à ce que la différence des signaux provenant des premier et deuxième capteurs (17a, 17b) soit nulle, et cet alignement est maintenu lorsque le champ de test est appliqué.

12. Procédé selon la revendication 10 ou 11, dans lequel le champ de test est entraîné dans un cycle d'activation et désactivation, et dans lequel, facultativement, le rapport marque/espace du cycle activation/désactivation est asymétrique.

13. Procédé selon l'une quelconque des revendications 9 à 11, comprenant une étape préliminaire de localisation grossière du trou (14) en ajustant la position de l'agencement sur une position supposée du trou jusqu'à ce qu'un signal maximum soit obtenu à partir d'un détecteur de champ magnétique (24) aligné pour détecter le champ de test aligné avec le trou.

14. Procédé selon l'une quelconque des revendications 9 à 13, comprenant l'étape supplémentaire de verrouillage de l'agencement en place pour lui permettre d'être utilisé comme guidage de foret ou de marqueur pour percer à travers la peau, et dans lequel, facultativement, le verrouillage est effectué par un agencement de ventouse (26).

15. Procédé selon l'une quelconque des revendications 9 à 14, dans lequel le centrage est confirmé par un agencement d'affichage visuel (21), et dans lequel, facultativement, l'agencement d'affichage visuel indique la direction dans laquelle l'agencement doit être ajusté pour réaliser le centrage.
